# EUROPEAN PATENT APPLICATION

(11) **EP 4 501 742 A1**
(43) Date of publication of application: **05.02.2025**
(21) Application number: 22935657.1
(22) Date of filing: 21.11.2022
(51) Int. Cl.: B61L 23/00, B61B 1/02, B61K 13/04, H04N 7/18

(54) **TRAIN DRIVING SUPPORT DEVICE, AND TRAIN DRIVING SUPPORT METHOD**

(30) Priority: 30.03.2022 JP 2022057167
(71) Applicant: Hitachi, Ltd., Tokyo 100-8280 (JP)
(72) Inventor: MIYAKI, Mariko, Tokyo 100-8280 (JP); OWAKI, Tsugumichi, Tokyo 100-8280 (JP); YAMAGATA, Shohei, Tokyo 100-8280 (JP); MURAKAMI, Mako, Tokyo 100-8280 (JP); MITA, Hitoshi, Tokyo 100-8280 (JP)
(74) Representative: Mewburn Ellis LLP
(86) International application number: PCT/JP2022/043064
(87) International publication number: WO 2023/188528

(57) **Abstract**

An object is to efficiently issue a notification of important information according to a state of a train with respect to a station platform. A train travel support apparatus includes: a person position determination unit that determines a positional relationship between a person at a station platform and the train by using an imaging result of a camera including a vicinity of a side surface of the train in an imaging range; an event detecting unit that detects an event to be notified to a surveillance staff by using a result of imaging by the camera; an identification unit that identifies a state of the train with respect to the station platform; and a display control unit that displays and outputs information on a positional relationship of the person and/or the event to a predetermined display device to notify the surveillance staff of the information, in which the display control unit selects an item to be displayed and output and/or a display mode based on an identification result by the identification unit.

## Description

### Technical Field

The present invention relates to a train travel support apparatus and a train travel support method.

### Background Art

Conventionally, there is a technique described in Japanese Patent Application Laid-Open No. 2019-191853 (Patent Literature 1) in order to ensure safety at the time of getting on/off a train or the like. There is a description of "performs image processing on an image acquired from an imaging unit C that is a detection unit provided on a side portion of a railway car T, and displays an image after image processing on a display unit M" in this publication.

### Citation List

### Patent Literature

PTL 1: JP 2019-191853 A

### Summary of Invention

### Technical Problem

According to the conventional technique, it is possible to acquire and display an image of a side of a car of a train. However, for example, when a driver performs safety confirmation simultaneously with a driving operation, it is a heavy burden to perform the safety confirmation only from real-time images of all the cars.

For this reason, it is required to efficiently issue a notification of important information to a surveillance staff responsible for safety confirmation such as a driver on the basis of an image of a side of a car of a train, and to support safe traveling of the train.

Here, the information to be notified to the surveillance staff changes depending on the transition of the state from when the train enters a station platform to when the train departs.

An object of the present invention is to efficiently issue a notification of important information according to a state of a train with respect to a station platform.

### Solution to Problem

In order to achieve the above object, one of the representative train travel support apparatuses of the present invention includes: a person position determination unit that determines a positional relationship between a person at a station platform and the train by using an imaging result of a camera including a vicinity of a side surface of the train in an imaging range; an event detecting unit that detects an event to be notified to a surveillance staff by using a result of imaging by the camera; an identification unit that identifies a state of the train with respect to the station platform; and a display control unit that displays and outputs information on a positional relationship of the person and/or the event to a predetermined display device to notify the surveillance staff of the information, in which the display control unit selects an item to be displayed and output and/or a display mode based on an identification result by the identification unit.

In addition, one of the representative train operation support methods of the present invention includes, by a train travel support apparatus mounted on a train: a person position determination step of determining a positional relationship between a person at a station platform and the train by using an imaging result of a camera including a vicinity of a side surface of the train in an imaging range; an event detection step of detecting an event to be notified to a surveillance staff by using a result of imaging by the camera; an identification step of identifying a state of the train with respect to the station platform; and a display control step of displaying and outputting information on a positional relationship of the person and/or the event to a predetermined display device to notify the surveillance staff of the information, in which the display control step selects an item to be displayed and output and/or a display mode based on an identification result by the identification step.

### Advantageous Effects of Invention

According to the present invention, it is possible to efficiently issue a notification of important information according to the state of the train with respect to the station platform. Problems, configurations, and effects other than those described above will be clarified by the following description of embodiment.

### Brief Description of Drawings

[FIG. 1] FIG. 1 is an explanatory diagram of train travel support according to a first embodiment.
[FIG. 2] FIG. 2 is an explanatory diagram of arrangement of cameras with respect to a car.
[FIG. 3] FIG. 3 is a configuration diagram of a system including a train travel support apparatus.
[FIG. 4] FIG. 4 is a specific example of display by a display device.
[FIG. 5] FIG. 5 is an explanatory diagram of information displayed on the display device.
[FIG. 6] FIG. 6 is a specific example of car display.
[FIG. 7] FIG. 7 is an explanatory diagram of notification control by arrival-departure phases.
[FIG. 8] FIG. 8 is an explanatory view for explaining a display mode of notification of an event.
[FIG. 9] FIG. 9 is a specific example of transition of display.
[FIG. 10] FIG. 10 is a flowchart illustrating a processing procedure of the train travel support apparatus.
[FIG. 11] FIG. 11 is a flowchart illustrating a processing procedure of notification of an event.

### Description of Embodiments

Hereinafter, embodiments will be described with reference to the drawings.

### First Embodiment

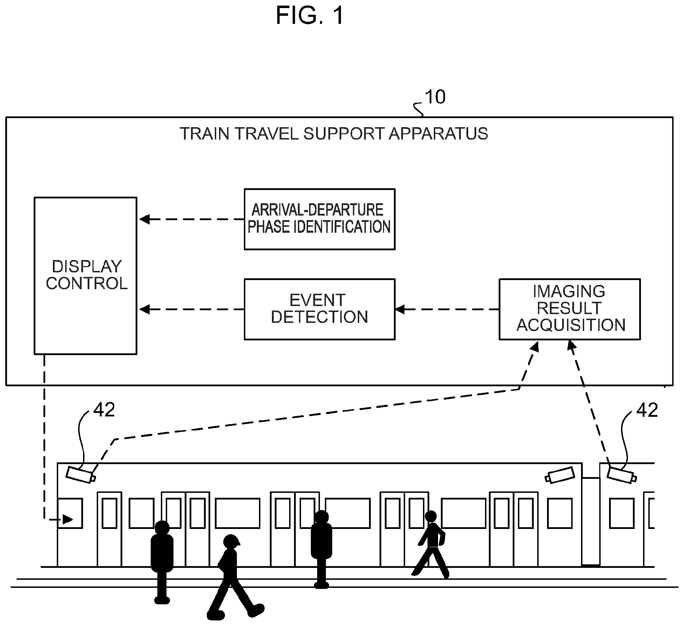

FIG. 1 is an explanatory diagram of train travel support according to a first embodiment. As illustrated in FIG. 1, a camera 42 including a vicinity of a side surface of a train in an imaging range is installed in each car of the train. When the train is entering the station platform, the camera 42 can photograph a person located at the station platform.

A train travel support apparatus 10 is an apparatus mounted on a train, and efficiently notifies a surveillance staff who is responsible for safety confirmation of the train of important information on the basis of an imaging result of the camera 42. In the following embodiment, a driver will be described as an example of a surveillance staff.

Specifically, the train travel support apparatus 10 acquires the imaging result of the camera 42 and detects an event to be notified to the driver for each car. Examples of the event to be notified include falling, running, parallel running, dovetail, and dragging. Among these events, falling is an event in which a person has fallen onto a track from a station platform, and the priority of notification is particularly high. Running, parallel running, dovetail, and dragging are examples of events with lower priority than falling. For convenience, falling is defined as a first event, and other events are defined as a second event.

In addition to the first event and the second event to be notified to the driver, the train travel support apparatus 10 determines the positional relationship between the person at the station platform and the train. It cannot be said that the presence of a person at the station platform is an event to be notified to the driver, but the positional relationship between the person and the train may be notified to the driver. For example, in a state where the door of the train is open, there is no need to notify the driver even if the positions of the train and the person are close, and in a state before the train departs after closing the door, the driver should be notified that the train and the person are close.

Here, four arrival-departure phases are defined as the state of the train with respect to the station platform. An entry phase is a state until the train enters the station platform and stops. A getting-on/off phase is a state where the train is stopped and the door is opened. A departure preparation phase is a state from when the train closes the door to when the train departs. An exit phase is a state from when the train departs to when the train leaves the station platform.

The train travel support apparatus 10 identifies four arrival-departure phases by using information such as position information, speed information, and information on an open/closed state of a door of the train.

The train travel support apparatus 10 notifies the driver of the detected event and the positional relationship with the person. This notification is performed, for example, by display control on a display device provided in a cab.

When performing the display control, the train travel support apparatus 10 selects an item to be displayed and output or a display mode on the basis of the identification result of the arrival-departure phase. Therefore, it is possible to efficiently issue a notification of important information in each of the arrival-departure phases.

In performing the display control, the train travel support apparatus 10 distinguishably displays and outputs the detection results of the first event and the second event. Further, a first operation receiving means for confirming the details of the first event and a second operation receiving means for confirming the details of the second event are individually provided.

Therefore, it is possible to prevent omission of confirmation of important information by separating notification and confirmation processing according to the importance level of the event.

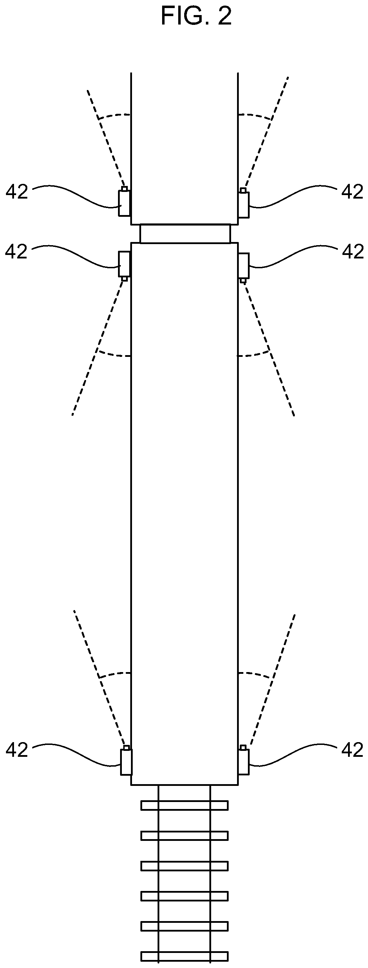

FIG. 2 is an explanatory diagram of arrangement of the cameras with respect to the car. The cameras 42 are disposed in the vicinity of both ends in the longitudinal direction on the left and right side surfaces of each car. That is, four cameras 42 are arranged in one car. Each camera 42 includes the vicinity of the door of the car in the imaging range.

The train travel support apparatus 10 uses the imaging results by the cameras 42 on the station platform side and the traveling direction side for real-time display. Imaging results of the two cameras 42 on the station platform side may be used for detecting an event and determining a positional relationship with a person. Unifying the cameras 42 used for display in real time among all the cars has an effect of avoiding confusion of the driver. In addition, the reason why the cameras 42 on the traveling direction side are used is that it is hardly affected by wind and rain or snow during traveling, and good image quality can be expected accordingly.

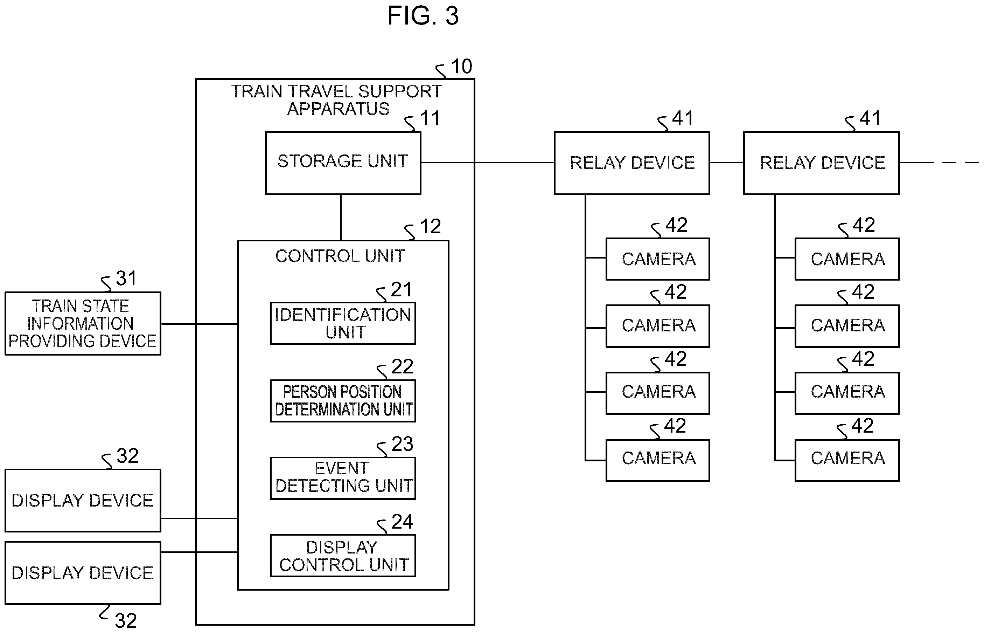

FIG. 3 is a configuration diagram of a system including the train travel support apparatus 10. Each car is provided with a relay device 41 in addition to the four cameras 42 described above. The relay device 41 transmits video captured by the camera 42 of the host car to the train travel support apparatus 10 as imaging result data. Furthermore, the relay device 41 can receive and relay imaging result data of another car from a relay device 41 of another car.

The train travel support apparatus 10 is connected to the train state information providing device 31, one or more display devices 32, and the relay device 41.

The train state information providing device 31 is an apparatus that provides information used to identify the arrival-departure phase. The train state information providing device 31 includes a position specifying device using a global positioning system (GPS) or the like, a drive control device capable of providing speed information of the train, a vehicle body control device capable of providing an open/closed state of a door, and the like.

The display device 32 is installed in the cab and performs display output to the driver. As the display device 32, a liquid crystal display or the like may be used.

The train travel support apparatus 10 includes a storage unit 11 and a control unit 12 therein.

The storage unit 11 is a hard disk drive or the like, and stores imaging result data of the camera 42 received via the relay device 41. It is preferable that all the four cameras 42 installed in each car constantly record images, and all the imaging result data is accumulated in the storage unit 11. In addition, the imaging result data can be managed in association with the determination result of the person position, the detection result of the event, whether the event has been confirmed by the driver, and the like.

The control unit 12 is a control unit that controls the entire operation of the train travel support apparatus 10, and includes an identification unit 21, a person position determination unit 22, an event detecting unit 23, and a display control unit 24. The control unit 12 may be realized by software. In this case, a central processing unit (CPU) develops a predetermined program in a memory and sequentially executes the program, thereby performing operations corresponding to the identification unit 21, the person position determination unit 22, the event detecting unit 23, and the display control unit 24.

The identification unit 21 identifies the state of the train with respect to the station platform. Specifically, the identification unit 21 acquires information such as position information, speed information, and information on an open/closed state of a door of the train from the train state information providing device 31, and uses the acquired information to identify which of the entry phase, the getting-on/off phase, the departure preparation phase, and the exit phase the information corresponds to.

The person position determination unit 22 uses the imaging result data of the camera 42 to determine the positional relationship between the person at the station platform and the train.

Specifically, the person position determination unit 22 determines a predetermined range from the train as a dangerous area, sets a caution area outside the dangerous area, and determines the presence or absence of a person in the dangerous area and the caution area. As an example, an area between a yellow line drawn to a station platform and a train may be defined as a dangerous area, and an area above the yellow line may be defined as a caution area.

The person position determination unit 22 determines the position of a person for each of a plurality of cars constituting the train.

The event detecting unit 23 performs image processing on the imaging result data of the camera 42 and detects an event to be notified to the driver. The event detecting unit 23 detects a previously designated event as a first event, and detects an event having a lower notification priority than the first event as a second event. The first event is preferably an event having a high priority of visual confirmation, and the second event is preferably an event having a lower priority of visual confirmation than the first event. Specifically, the event detecting unit 23 detects falling of a person from a station platform as the first event, and detect other events having a lower notification priority than the falling as the second event. Other events include running, parallel running, dovetail, dragging, and the like. The running is an event in which a person suddenly approaches the car. The parallel running is an event in which a person at a station platform moves in the same direction as the moving direction of the train. The dovetail is an event in which a door of a car pinches a person or an article. The dragging is an event in which a person or an article is physically connected to a train and moves at the same speed in the same direction as the train.

The event detecting unit 23 detects an event for each of a plurality of cars constituting the train.

The display control unit 24 displays and outputs information on the positional relationship of the person and the event on the display device 32 to notify the driver of the information.

At this time, the display control unit 24 selects the matter to be displayed and output and/or the display mode on the basis of the identification result by the identification unit 21.

Specifically, the display control unit 24 notifies the detection results of the first event and the second event in the entry phase, the departure preparation phase, or the exit phase. On the other hand, in the getting-on/off phase, the display control unit 24 suppresses the notification of the detection result of the second event and notifies the detection result of the first event.

In the entry phase or the exit phase, the display control unit 24 notifies that a person is present in the dangerous area. On the other hand, in the departure preparation phase or the getting-on/off phase, the display control unit 24 performs notification that a person is present in the dangerous area and notification that a person is present in the caution area.

Furthermore, the display control unit 24 uses a display mode having higher visual attraction than the display modes in other phases as the display mode of the notification in the departure preparation phase. The visual attraction indicates ease of attention and conspicuousness. It can be said that the visibility indicates ease of finding when consciously searching, whereas the visual attraction indicates ease of noticing when not consciously searching.

The display control unit 24 schematically displays the car composition of the train, and performs display control to associate the information on the positional relationship of the person and/or the event with the car. At this time, the display control unit 24 uses the entire schematically displayed car for the notification when issuing a notification about the event, and uses a part of the schematically displayed car for the notification when issuing a notification about the positional relationship of the person. When the notification of the information on the event is performed, the display control unit 24 displays the first event and the second event in a distinguishable manner. In a case where a plurality of events is detected in one car, the display control unit 24 performs display control with priority given to a first event that has not received an operation with respect to the first operation receiving means to be described later, a first event that has received an operation with respect to the first operation receiving means, and a second event that has not received an operation with respect to the second operation receiving means to be described later in this order.

In addition, the display control unit 24 displays the imaging result data of the camera 42 in addition to schematically displaying the car composition of the train.

Specifically, the display control unit 24 divides the display region of the display device, and provides a plurality of regions for displaying the imaging result for each car in real time in one-to-one correspondence with the plurality of cars, and a region for enlarging and displaying the imaging result for any of the plurality of cars. The display control unit 24 enlarges and displays the imaging result of the car that has detected the first event and/or the second event.

The display control unit 24 displays the imaging result data in real time for the car to be enlarged and displayed, and displays and outputs the detection results of the first event and the second event in a distinguishable manner. Further, a first operation receiving means for confirming the details of the first event and a second operation receiving means for confirming the details of the second event are individually provided. Specifically, the first operation receiving means and/or the second operation receiving means may be superimposed and displayed on the enlarged and displayed imaging result.

Note that the display control unit 24 uses the imaging results by the cameras on the station platform side and the traveling direction side for real-time display.

The display control unit 24 displays a video recording/reproduction button as the first operation receiving means when a first event is detected, and displays a video recording/reproduction button as the second operation receiving means when a second event is detected. Then, when the operation on the first operation receiving means is received, the imaging result including the corresponding first event is read from the storage unit 11 and reproduced, and when the operation on the second operation receiving means is received, the imaging result including the corresponding second event is read from the storage unit 11 and reproduced.

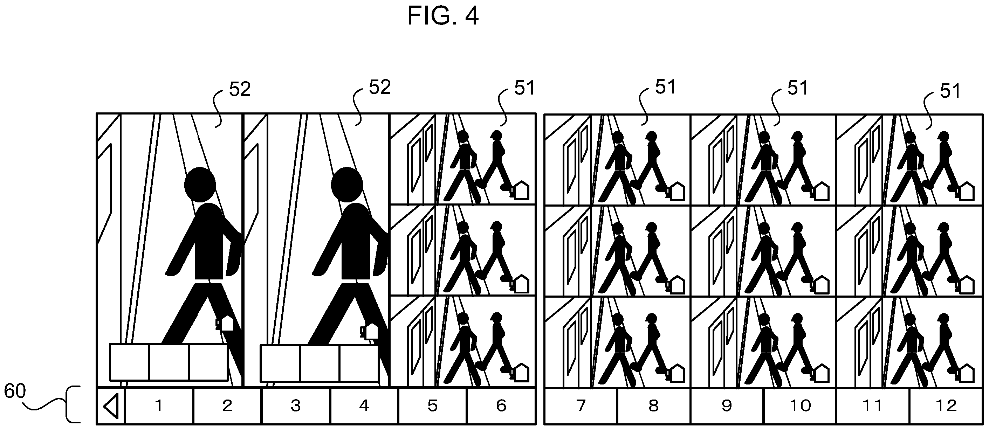

FIG. 4 is a specific example of display by the display device 32. In FIG. 4, two display devices 32 are displayed side by side. As illustrated in FIG. 4, the display device 32 displays a plurality of display regions 51, one or a plurality of display regions 52, and a car composition display 60.

The plurality of display regions 51 displays the imaging results of the respective cars in real time in one-to-one correspondence with the plurality of cars.

The display region 52 is larger than the display region 51, and enlarges and displays the imaging result of any car. The display region 52 is used to display the imaging result of the car in which the event is detected. It is also possible to enlarge and display the imaging result of the car selected by the driver. The display region 52 can perform display in real time and reproduce past imaging results read from the storage unit 11.

The car composition display 60 schematically displays the car composition of the train. The car composition display 60 can be used for notification of the position of the person, the detected event, and the confirmation status of the detected event by the driver.

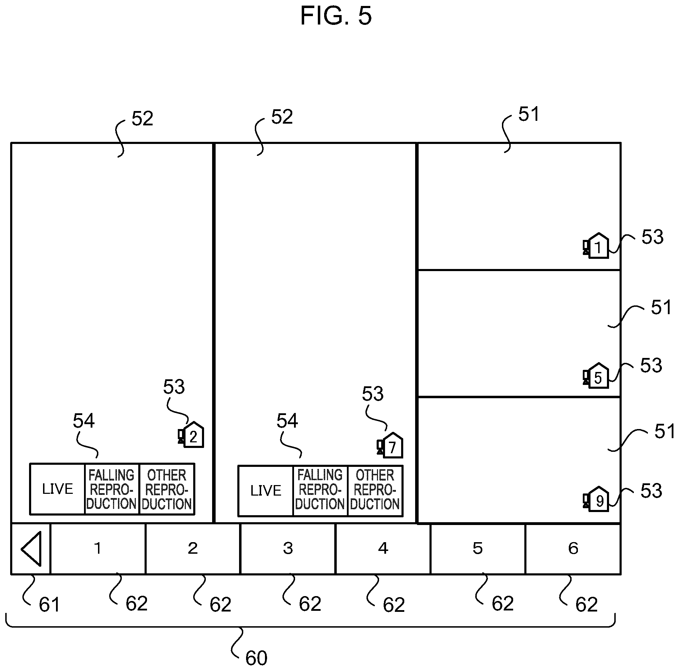

FIG. 5 is an explanatory diagram of information displayed on the display device 32. As illustrated in FIG. 5, a car icon 53 is displayed in the display region 51. The car icon 53 indicates a car number. Further, the car icon 53 indicates at which position of the car the imaging result of the camera 42 is displayed in the display region 51.

In the display region 52, a car icon 53 and a button 54 are displayed. The button 54 is used to receive an operation of selecting whether to display a real-time imaging result in the display region 52 or to reproduce and display a past imaging result read from the storage unit 11.

When the event detecting unit 23 detects a falling event, the display control unit 24 displays a falling reproduction button in the display region 52. When the event detecting unit 23 detects an event other than falling, the display control unit 24 displays another reproduction button in the display region 52. When the event detecting unit 23 detects both a falling event and other events, the display control unit 24 displays a falling reproduction button and another reproduction button in the display region 52.

When the falling reproduction button is operated, the display control unit 24 reads and reproduces the imaging result data including the corresponding falling event from the storage unit 11, and displays a live reproduction button and a confirmation completion button. When the live reproduction button is operated, the display control unit 24 shifts to display in real time. When the confirmation completion button is operated, the display control unit 24 stores the confirmation completion flag in association with the falling event in the storage unit 11, and shifts to the display in real time.

When the other reproduction button is operated, the display control unit 24 reads and reproduces the imaging result data including the corresponding event from the storage unit 11, and displays the live reproduction button. When the live reproduction button is operated, the display control unit 24 shifts to display in real time.

The car composition display 60 includes a traveling direction display 61 and a car display 62. The car display 62 is displayed as many as the number of cars of the train, and car numbers are assigned thereto.

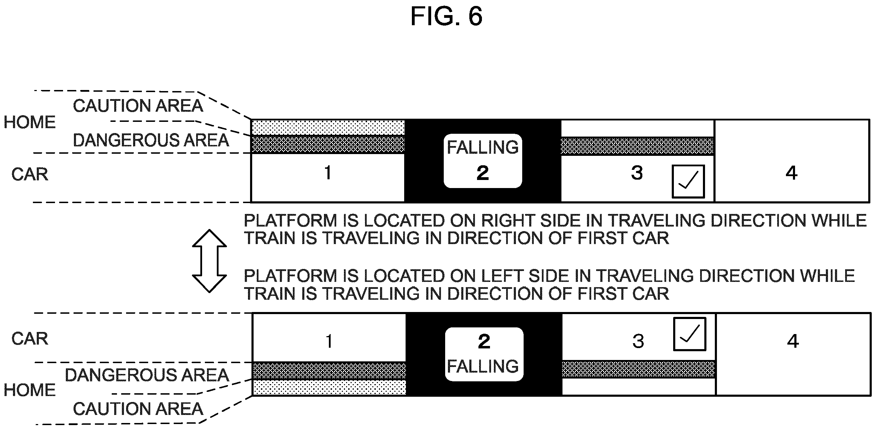

FIG. 6 is a specific example of the car display. When a falling event or other events are detected, the entire car display 62 is used for notification of the event. In addition, the classification of the event is indicated by a display such as "falling" or "others". The notification of the other events is canceled when the event is canceled. Regarding the falling event, the notification is canceled by the confirmation completion operation, and a display indicating the confirmation completion is attached. In FIG. 6, the display of the check box is a display indicating confirmation completion.

When there is a person in the dangerous area or the caution area, a part of the car display 62 is used for the notification. The portion used for the notification is determined according to the positional relationship between the dangerous area or the caution area and the car. FIG. 6 illustrates a situation in which the first car and the second car are displayed in this order from the left and travel in the direction of the first car. In this situation, when the station platform is located on the right side in the traveling direction, the person detection in the caution area, the person detection in the dangerous area, and the car number are displayed in this order from the top of the car display 62. When the station platform is located on the left side in the traveling direction, the car number, the person detection in the dangerous area, and the person detection in the caution area are displayed in this order from the top of the car display 62.

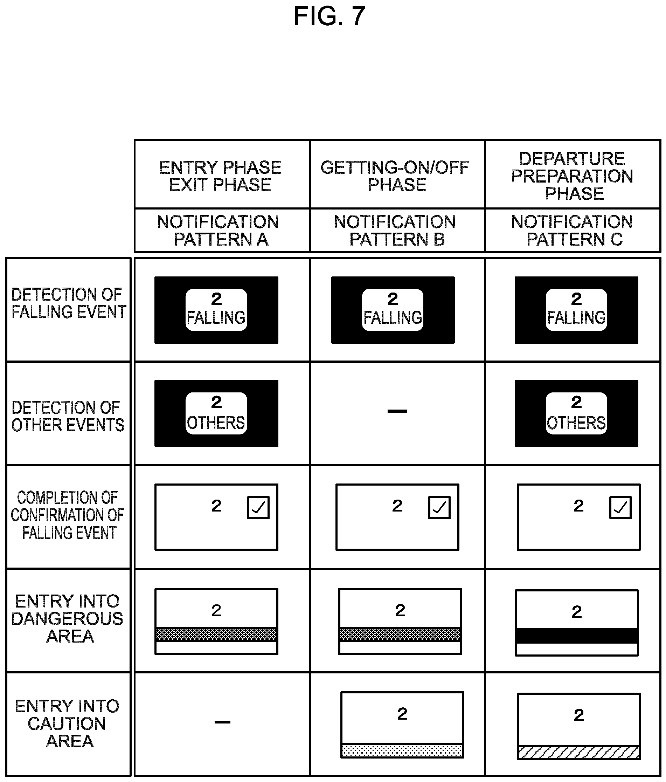

FIG. 7 is an explanatory diagram of control of notification by the arrival-departure phase. As illustrated in FIG. 7, the notification pattern A is adopted in the entry phase and the exit phase. A notification pattern B is adopted in the getting-on/off phase, and a notification pattern C is adopted in the departure preparation phase.

The notification pattern A notifies detection of a falling event, detection of other events, completion of confirmation of a falling event, and presence of a person in the dangerous area, but does not notify presence of a person in the caution area. This is because the caution area is, for example, a position where a person on the station platform is instructed to "go down to this place" in a situation where the train is moving, and even if there is a person in the caution area, no special call for attention to the driver is required.

The notification pattern B notifies detection of a falling event, completion of confirmation of the falling event, presence of a person in the dangerous area, and presence of a person in the caution area, but does not notify detection of other events. This is because, at the time of getting on/off, even if running occurs, it does not lead to danger.

The notification pattern C notifies detection of a falling event, detection of other events, completion of confirmation of a falling event, presence of a person in the dangerous area, and presence of a person in the caution area. Furthermore, in the notification pattern C, the presence of a person in the dangerous area or the caution area is notified using a display having higher visual attraction than other notification patterns. This is because, in the departure preparation phase, the location of a person in the dangerous area or the caution area is particularly important in order to determine whether departure is possible.

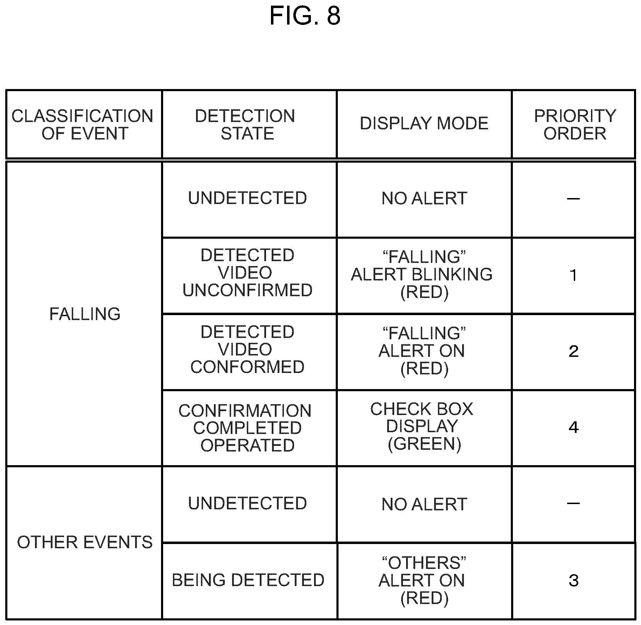

FIG. 8 is an explanatory diagram illustrating a display mode of the event notification.

If the falling event has not been detected, there is no need for notification. When a falling event is detected and video is in an unconfirmed state where a past imaging result is not reproduced, the display control unit 24 blinks the entire car display 62 in red and displays "falling". When the video in which the falling event is detected and the past imaging result is reproduced has been confirmed, the display control unit 24 lights the entire car display 62 in red and displays "falling". When the confirmation completion operation has been received by detecting the falling event, the display control unit 24 displays a green check box on the car display 62.

When other events are detected, notification is not necessary. If other events are being detected, the display control unit 24 lights the entire car display 62 in red and displays "OTHER".

The priority order of the notification of the event is the highest when the falling event is detected and the video is unconfirmed, and the priority order is "1". The priority order is "2" when the falling event is detected and the video has been confirmed, the priority order is "3" when other events are being detected, and the priority order is "4" when the confirmation completion operation for the falling event has been completed. When a plurality of events occurs in one car, the event having the highest priority order is displayed.

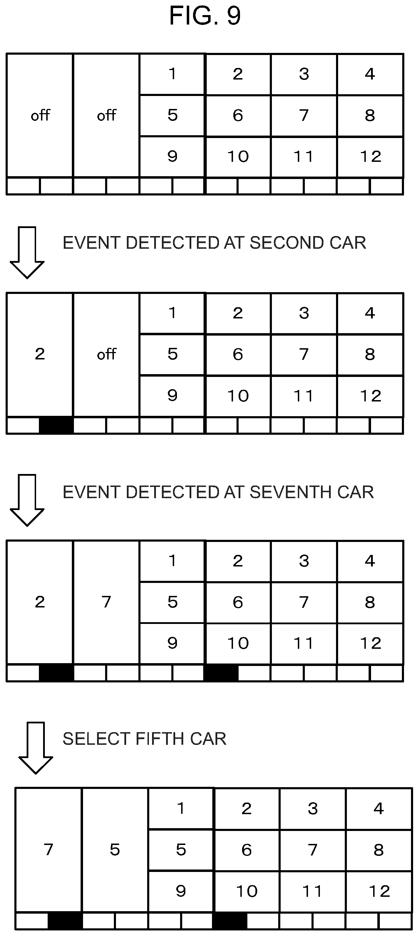

FIG. 9 is a specific example of transition of display. In the initial state, when there is no event to be notified, the plurality of display regions 51 displays the imaging results of the corresponding cars in real time, and the display region 52 has no display output.

When the event detecting unit 23 detects an event in the second car, the car display 62 of the second car blinks or lights up, and the display region on the left side enlarges and displays the imaging result of the second car in real time. Thereafter, when the event detecting unit 23 detects an event in the seventh car, the car display 62 of the seventh car blinks or lights up, and the display region on the right side enlarges and displays the imaging result of the seventh car in real time.

Further, when the driver manually requests the enlarged display of the fifth car, the enlarged display of the oldest second car is excluded, the enlarged display of the seventh car is shifted to the display region 52 on the left side, and the display region 52 on the right side is used for the enlarged display of the newest fifth car.

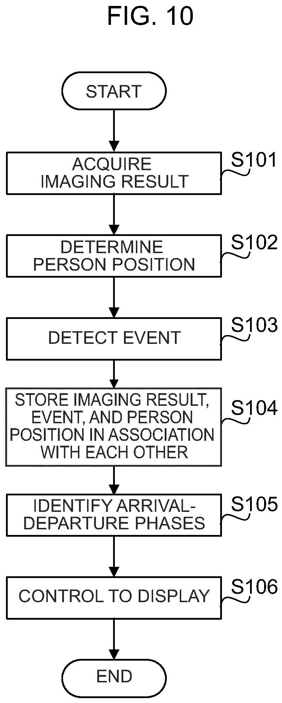

FIG. 10 is a flowchart illustrating a processing procedure of the train travel support apparatus 10. First, the storage unit 11 acquires an imaging result of the camera 42 (step S101) and stores the imaging result. The person position determination unit 22 performs image processing on the imaging result of the camera 42 to determine the person position (step S102). The event detecting unit 23 performs image processing on the imaging result of the camera 42 to detect a first event (falling) and a second event (other events) (step S103).

The storage unit 11 stores the imaging result, the detection result of the event, and the position of the person in association with each other (step S104). The identification unit 21 identifies four arrival-departure phases by using information such as position information of the train, speed information, and information of an open/closed state of a door (step S105). The display control unit 24 controls the display device 32 to display the detected event and the positional relationship with the person (step S106), and ends the processing. As described above, in step S106, the display control unit 24 selects an item to be displayed and output or a display mode on the basis of the identification result of the arrival-departure phase, and distinguishably displays and outputs the detection results of the first event and the second event.

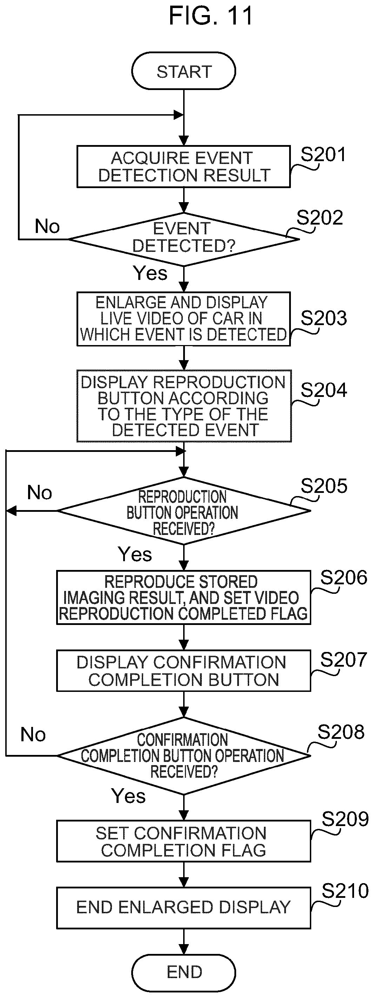

FIG. 11 is a flowchart illustrating a processing procedure of notification of an event. First, the display control unit 24 acquires a detection result of an event by the event detecting unit 23 (step S201). When the event detecting unit 23 has not detected an event (step S202; No), the process returns to step S201.

When the event detecting unit 23 detects an event (step S104; Yes), the live video (real-time imaging result) of the car in which the event is detected is enlarged and displayed (step S203), and the reproduction button is displayed according to the type of the detected event (the first event or the second event) (step S204).

When the operation on the reproduction button has been received (step S205; Yes), the display control unit 24 reproduces the imaging result stored in the storage unit 11, and sets a video reproduction completed flag (step S206). Thereafter, a confirmation completion button is displayed (step S207). When the operation on the confirmation completion button has not been received (step S208; No), or when the operation of the reproduction button has not been received (step S205; No), the process returns to step S205.

When the operation on the confirmation completion button has been received (step S208; Yes), the display control unit 24 sets a confirmation completion flag (step S2089), ends the enlarged display (step S210), and ends the processing.

As described above, the train travel support apparatus 10 according to the disclosure includes: the person position determination unit 22 that determines a positional relationship between a person at a station platform and the train by using an imaging result of the camera 42 including a vicinity of a side surface of the train in an imaging range; the event detecting unit 23 that detects an event to be notified to a surveillance staff by using an imaging result by the camera 42; the identification unit 21 that identifies a state of the train with respect to the station platform; and the display control unit 24 that displays and outputs information on a positional relationship of the person and/or the event to the predetermined display device 32 to notify the surveillance staff of information. Then, the display control unit 24 selects an item to be displayed and output and/or a display mode based on an identification result by the identification unit 21.

With such a configuration and operation, the train travel support apparatus 10 can efficiently issue a notification of important information according to the state of the train with respect to the station platform.

Further, the identification unit 21 identifies, as the state, four phases: an entry phase in which the train enters and stops at the station platform; a getting-on/off phase in which the train stops and a door is opened; a departure preparation phase in which the train departs after closing the door; and an exit phase in which the train leaves the station platform after departing.

Therefore, it is possible to efficiently issue a notification of important information in each phase in arrival-departure.

Further, the event detecting unit 23 detects falling of the person from the station platform as a first event, and detects an event having a lower notification priority than the falling as a second event.

The display control unit 24 is configured to: issue a notification of detection results of the first event and the second event in the entry phase, the departure preparation phase, or the exit phase; and suppress a notification of the detection result of the second event and give a notification of the detection result of the first event in the getting-on/off phase.

Therefore, unnecessary notification in the getting-on/off phase can be suppressed.

In addition, the person position determination unit 22 determines a predetermined range from the train as a dangerous area, sets a caution area outside the dangerous area, and determines presence or absence of a person in the dangerous area and the caution area.

Then, the display control unit 24 is configured to: issue a notification of presence of a person in the dangerous area in the entry phase or the exit phase; issue a notification of presence of a person in the dangerous area and a notification of presence of a person in the caution area in the departure preparation phase or the getting-on/off phase; and use a display mode having higher visual attraction than display modes in other phases as a display mode of the notification in the departure preparation phase.

Therefore, it is possible to efficiently issue a notification of the positional relationship between the train and the person.

In addition, the camera 42 is provided for each car constituting the train, the person position determination unit 22 determines a position of a person for each of the cars, the event detecting unit 23 detects an event for each of the cars, and the display control unit 24 schematically displays a car composition of the train, and performs display control to associate the information on the positional relationship of the person and/or the event with the car.

Therefore, it is possible to efficiently issue a notification of a plurality of cars.

In addition, the display control unit 24 uses the entire schematically displayed car for the notification when issuing a notification about the event, and uses a part of the schematically displayed car for the notification when issuing a notification about the positional relationship of the person.

Therefore, the notification of the event can be preferentially performed.

In addition, the cameras 42 are disposed in a vicinity of both ends in a longitudinal direction of a car on left and right side surfaces of the car constituting the train, and each of the cameras has an imaging range in a vicinity of a door of the car.

Therefore, it is possible to select and use the camera 42 that can obtain good image quality according to the traveling direction, which side the station platform is on, and the like.

Note that the present invention is not limited to the above embodiment, and includes various modifications. For example, the embodiment described above has been described in detail for easy understanding of the present invention, and is not necessarily limited to that having all the configurations described. In addition, the configuration can be replaced or added as well as the deletion of the configuration.

For example, in the above embodiment, the configuration in which the four cameras 42 are installed in one car has been exemplified, but the cameras 42 may be installed on a door or the like.

In the above embodiment, the driver has been described as an example of the surveillance staff who performs the safety confirmation of the train, but a crew who does not operate may be the surveillance staff. In addition, a configuration may be employed in which a surveillance staff is arranged at a station or a surveillance center without boarding a train.

### Reference Signs List

- 10: train travel support apparatus
- 11: storage unit
- 12: control unit
- 21: identification unit
- 22: person position determination unit
- 23: event detecting unit
- 24: display control unit
- 31: train state information providing device
- 32: display device
- 41: relay device
- 42: camera
- 51, 52: display region
- 53: car icon
- 60: car composition display
- 61: traveling direction display
- 62: car display

## Claims

1. A train travel support apparatus comprising:
a person position determination unit that determines a positional relationship between a person at a station platform and a train by using an imaging result of a camera including a vicinity of a side surface of the train in an imaging range;
an event detecting unit that detects an event to be notified to a surveillance staff by using a result of imaging by the camera;
an identification unit that identifies a state of the train with respect to the station platform; and
a display control unit that displays and outputs information on a positional relationship of the person and/or the event to a predetermined display device to notify the surveillance staff of the information,
wherein the display control unit selects an item to be displayed and output and/or a display mode based on an identification result by the identification unit.

2. The train travel support apparatus according to claim 1,
wherein the identification unit identifies, as the state, four phases:
an entry phase in which the train enters and stops at the station platform;
a getting-on/off phase in which the train stops and a door is opened;
a departure preparation phase in which the train departs after closing the door; and
an exit phase in which the train leaves the station platform after departing.

3. The train travel support apparatus according to claim **2,**
wherein the event detecting unit detects falling of the person from the station platform as a first event, and detects an event having a lower notification priority than the falling as a second event, and
the display control unit is configured to:
issue a notification of detection results of the first event and the second event in the entry phase, the departure preparation phase, or the exit phase; and
suppress a notification of the detection result of the second event and give a notification of the detection result of the first event in the getting-on/off phase.

4. The train travel support apparatus according to claim 2,
wherein the person position determination unit determines a predetermined range from the train as a dangerous area, sets a caution area outside the dangerous area, and determines presence or absence of a person in the dangerous area and the caution area, and
the display control unit is configured to:
issue a notification of presence of a person in the dangerous area in the entry phase or the exit phase;
issue a notification of presence of a person in the dangerous area and a notification of presence of a person in the caution area in the departure preparation phase or the getting-on/off phase; and
use a display mode having higher visual attraction than display modes in other phases as a display mode of the notification in the departure preparation phase.

5. The train travel support apparatus according to claim 1,
wherein the camera is provided for each car constituting the train,
the person position determination unit determines a position of a person for each of the cars,
the event detecting unit detects an event for each of the cars, and
the display control unit schematically displays a car composition of the train, and performs display control to associate the information on the positional relationship of the person and/or the event with the car.

6. The train travel support apparatus according to claim **5,** wherein the display control unit uses the entire schematically displayed car for the notification when issuing a notification about the event, and uses a part of the schematically displayed car for the notification when issuing a notification about the positional relationship of the person.

7. The train travel support apparatus according to claim **1,** wherein the cameras are disposed in a vicinity of both ends in a longitudinal direction of a car on left and right side surfaces of the car constituting the train, and each of the cameras has an imaging range in a vicinity of a door of the car.

8. A train travel support method comprising, by a train travel support apparatus mounted on a train:
a person position determination step of determining a positional relationship between a person at a station platform and the train by using an imaging result of a camera including a vicinity of a side surface of the train in an imaging range;
an event detection step of detecting an event to be notified to a surveillance staff by using a result of imaging by the camera;
an identification step of identifying a state of the train with respect to the station platform; and
a display control step of displaying and outputting information on a positional relationship of the person and/or the event to a predetermined display device to notify the surveillance staff of the information,
wherein the display control step selects an item to be displayed and output and/or a display mode based on an identification result by the identification step.
